# EUROPÄISCHE PATENTANMELDUNG

(11) **EP 1 415 705 A1**
(43) Veröffentlichungstag der Anmeldung: **06.05.2004**
(21) Anmeldenummer: 03022712.8
(22) Anmeldetag: 09.10.2003
(51) Int. Cl.: B01J 8/04, C01B 3/38

(54) **Apparat zur Erzeugung von Wasserstoff und Verfahren zum Betrieb eines solchen Apparats**

(30) Priorität: 30.10.2002 DE 10250793
(71) Anmelder: Viessmann Werke GmbH & Co KG, 35107 Allendorf (DE)
(72) Erfinder: Britz, Peter, Dr., 35108 Allendorf (DE); Zartenar, Nicolas, 35091 Coelbe (DE); Heikrodt, Klaus, Dr., 35108 Allendorf (DE); Hafner, Bernd, Dr., 35108 Allendorf (DE)
(74) Vertreter: Wolf, Günter, Dipl.-Ing.

(57) **Zusammenfassung**

Die Erfindung betrifft ein Verfahren und einen Apparat zur Erzeugung von Wasserstoff zum Betrieb einer Brennstoffzelle, umfassend einen Reformer (1) zur Umwandlung eines Eduktgases, nämlich Kohlenwasserstoffgas und Wasserdampf, in ein Wasserstoffgas und weitere Reformerprodukte wie Kohlendioxid und - monoxid enthaltendes Produktgas und mindestens eine Katalysatorstufe (2) zur Reduzierung des Kohlenmonoxidanteils im Produktgas, wobei zur Abkühlung des Produktgases mindestens zwischen dem Reformer (1) und der Katalysatorstufe (2) ein wasserdurchströmter Wärmetauscher (3) angeordnet ist, der ausgangsseitig hydraulisch mit einem Edukteingang (4) des Reformers (1) verbunden ist. Nach der Erfindung ist vorgesehen, dass der Wärmetauscher (3) zur Gewährleistung eines flüssigen Aggregatzustandes des Wassers im stationären Betrieb innerhalb und am reformerseitigen Ausgang des Wärmetauschers (3) mit einer unter entsprechendem Überdruck stehenden Wasserzufuhreinrichtung (5) verbunden und zwischen dem Wärmetauscher (3) und dem Edukteingang (4) am Reformer (1) eine Vorrichtung zur Druckentspannung, vorzugsweise ein Expansionsventil (6), zum Verdampfen des Wassers angeordnet ist.

## Beschreibung

Die Erfindung betrifft einen Apparat zur Erzeugung von Wasserstoff zum Betrieb einer Brennstoffzelle gemäß dem Oberbegriff des Anspruchs 1 sowie ein Verfahren zum Betrieb des genannten Apparats gemäß dem Oberbegriff des Anspruchs 7.

Nach der DE 100 57 537 A1 ist ein Apparat zur Erzeugung von Wasserstoff bekannt, der u. a. einen Reformer zur Umwandlung von Kohlenwasserstoffgas und Wasser in Wasserstoff und weitere Reformerprodukte aufweist. Dem Reformer sind mehrere Katalysatorstufen zur Reduzierung des Kohlenmonoxidanteils im Produktgas nachgeschaltet. Um bei diesem Apparat die Temperatur des Produktgases am Reformerausgang von etwa 800°C auf 400°C abzusenken, ist zwischen dem Reformer und der nachfolgenden Katalysatorstufe ein Wärmetauscher angeordnet. Zur Kühlung wird diesem Wasser zugeführt, das anschließend im Reformer zusammen mit dem gegebenenfalls auf gleichem Wege zugeführten Kohlenwasserstoffgas als Eduktgas dient. Da das Wasser dem Reformer normalerweise nicht flüssig zuführbar ist, hat es sich bei diesem Apparat als besonders zweckmäßig erwiesen, dieses mittels der vorgeschalteten Wärmetauscher vorab zu verdampfen.

Als problematisch hat sich dabei herausgestellt, dass der Aggregatzustand des Wassers insbesondere im zwischen dem Reformer und der ersten Katalysatorstufe angeordneten Wärmetauscher zwischen dampfförmig und flüssig variiert. Da sich aber bekanntermaßen die Wärmeübertragungseigenschaften eines Mediums bei einem Wechsel von flüssig zu dampfförmig erheblich verschlechteren, kann beim beschriebenen Apparat insbesondere bei Lastwechselbetrieb der tatsächliche Aggregatzustand des Wassers im Wärmetauscher vorab nicht definitiv vorherbestimmt werden, d. h. bei diesem Apparat kommt es immer wieder zu undefinierten Wärmeübertragungszuständen im Wärmetauscher und damit zu unklaren Eintrittsbedingungen an der Katalysatorstufe, was insofern nachteilig ist, als es für den Kohlenmonoxidreinigungsprozess jeweils eine genau einzuhaltende Optimaltemperatur gibt und eine Abweichung von dieser zu einem deutlich schlechteren Reinigungsergebnis führt.

Der Erfindung liegt die Aufgabe zugrunde, bei einem Apparat der eingangs genannten Art auf technisch möglichst einfache Weise dafür zu sorgen, dass trotz Beibehaltung der Wasservorheizung in jedem Betriebszustand gewährleistet ist, dass der zwischen Reformer und Katalysatorstufe angeordnete Wärmetauscher ausschließlich von flüssigem Wasser durchströmt wird.

Diese Aufgabe ist gegenständlich mit einem Apparat der eingangs genannten Art durch die im Kennzeichen des Anspruchs 1 aufgeführten Merkmale gelöst. Die Merkmale des Kennzeichens des Anspruchs 7 lösen die Aufgabe verfahrensmäßig.

Die Erfindung umfasst somit zwei wesentliche Merkmale: Erstens ist es zur Aufrechterhaltung des flüssigen Aggregatzustandes des durch den Wärmetauscher strömenden Wassers erforderlich, dieses unter einen hohen Druck zu setzen, damit es trotz einer Temperatur oberhalb von 100°C nicht verdampft. Wie hoch dieser Druck in Abhängigkeit von der Temperatur jeweils zu sein hat, ergibt sich aus der allgemein bekannten Dampfdruckkurve des Wassers. Als Quelle diesen Drucks kommt beispielsweise der Wasseranschluss eines Hauses in Betracht, der üblicherweise einen Überdruck (gegenüber der Umgebung) von etwa 3 bis 4 bar aufweist. Dieser Druck würde genügen, um Wasser bei eine Temperatur von etwa 130°C flüssig zu halten. Bei höheren Temperaturen müßte die Wasserzufuhreinrichtung gegebenenfalls mit einer Pumpe versehen sein, die das für die jeweilige Temperatur erforderliche Druckniveau schafft. Für flüssiges Wasser mit einer Temperatur von 200°C ist beispielsweise laut Dampfdruckkurve ein Druck von etwa 20 bar erforderlich.

Das zweite erfindungswesentliche Merkmal besteht darin, das aus dem Wärmetauscher mit vergleichsweise hohem Druck austretende Wasser einer Vorrichtung zur Druckentspannung, vorzugsweise einem Expansionsventil, zuzuführen, um es an diesem per Druckentspannung zu verdampfen. Dampfförmig wird es dann dem Edukteingang des Reformers zugeführt.

vorzugsweise ist nach dem Expansionsventil eine Vorrichtung zum Vermischen des heißen Wasserdampfes mit dem Kohlenwasserstoffgas vorgesehen. Diese besteht bei einer besonders bevorzugten Ausführungsform, auf die später noch näher eingegangen wird, aus einer sogenannten Strahlpumpe, bei der das Kohlenwasserstoffgas mittels des sogenannten Venturidüseneffektes angesaugt und mit dem Wasserdampf verwirbelt und vermischt wird. Dabei erhöht sich auch gleichzeitig vorteilhaft der Druck des Eduktgemisches.

Andere vorteilhafte Weiterbildungen ergeben sich aus den abhängigen Ansprüchen.

Der erfindungsgemäße Apparat sowie seine vorteilhaften Weiterbildungen gemäß der abhängigen Ansprüche wird nachfolgend anhand der zeichnerischen Darstellung eines Ausführungsbeispiels näher erläutert.

Es zeigt schematisch
- Fig. 1: den erfindungsgemäßen Apparat mit Expansionsventil und Strahlpumpe im Verbund mit einer Brennstoffzelle; und
- Fig. 2: eine qualitative Darstellung der Dampfdruckkurve des Wassers.

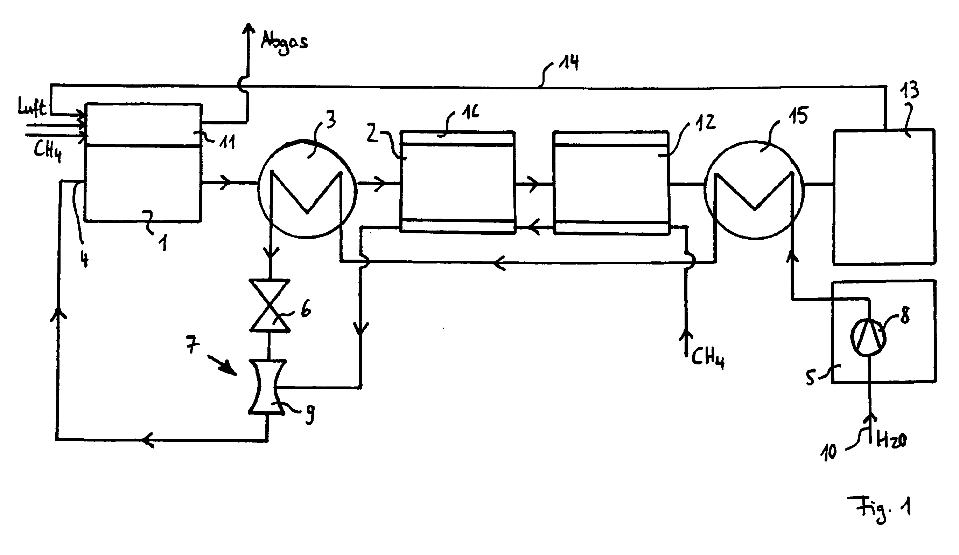

Der in Fig. 1 dargestellte Apparat zur Erzeugung von Wasserstoff zum Betrieb einer Brennstoffzelle 13 (vorzugsweise eine sogenannte PEM-Brennstoffzelle) umfasst insbesondere einen Reformer 1 zur Umwandlung eines Eduktgases, nämlich Kohlenwasserstoffgas und Wasserdampf, in ein Wasserstoffgas und weitere Reformerprodukte wie Kohlendioxid und -monoxid enthaltendes Produktgas. Der Reformer 1 wird beim dargestellten Ausführungsbeispiel als sogenannter allothermer Reformer betrieben, d. h. die für die Reformierung erforderliche Wärme wird von aussen über einen Gasbrenner 11 bereitgestellt. Dem Gasbrenner selbst werden, wie in Fig. 1 dargestellt, für den Wärmeerzeugungsprozess Luft und Kohlenwasserstoffgas (vorzugsweise Erdgas) über entsprechende Anschlüsse zugeführt. Ferner wird dem Brenner 11 noch über die mit der Anode der Brennstoffzelle 13 verbundene Anodenrestgasrückführung 14 unverbrauchter Wasserstoff zugeführt.

Der erfindungsgemäße Apparat weist ferner eine sogenannte Single-Shift-Stufe (Katalysatorstufe 2) und eine Gasfeinreinigungsstufe 12 (wahlweise sogenannte SelOx- oder Methanisierungsstufe) zur Reduzierung des Kohlenmonoxidanteils im Produktgas auf. Beide Stufen sind vorzugsweise mit einer Aussenmantelkühlung 16 versehen, d. h. während des Betriebs wird ein Kühlmedium (im vorliegenden Fall das Kohlenwasserstoffgas selbst) durch einen äusseren Strömungsmantel geleitet, um die in den Katalysatorstufen 2, 12 beim exothermen Prozess der Kohlenmonoxidreduktion anfallende Wärme abzuführen.

Zur Abkühlung des Produktgases nach der Reformierung ist insbesondere zwischen dem Reformer 1 und der Katalysatorstufe 2 ein wasserdurchströmter Wärmetauscher 3 angeordnet, der ausgangsseitig hydraulisch mit einem Edukteingang 4 des Reformers 1 verbunden ist. Beim dargestellt Ausführungsbeispiel ist ferner noch zwischen der Gasfeinreinigungsstufe 12 und der Brennstoffzelle 13 ein weiterer Wärmetauscher 15 vorgesehen, der ebenfalls dazu dient, einerseits das Produktgas abzukühlen und andererseits das für den Reformerprozess erforderliche Wasser vorzuheizen.

Wesentlich für den erfindungsgemäßen Apparat ist nun, dass mindestens der Wärmetauscher 3 (hier auch der Wärmetauscher 15) zur Gewährleistung eines flüssigen Aggregatzustandes des Wassers im stationären Betrieb innerhalb und am reformerseitigen Ausgang des Wärmetauschers 3, 15 mit einer unter entsprechendem Überdruck stehenden Wasserzufuhreinrichtung 5 verbunden ist und dass zwischen dem Wärmetauscher 3 und dem Edukteingang 4 am Reformer 1 eine Vorrichtung zur Druckentspannung, vorzugsweise, wie dargestellt, ein Expansionsventil 6, zum Verdampfen des Wassers angeordnet ist.

Wie erläutert, ist somit erfindungswesentlich, dass das für den Reformerprozess erforderliche Wasser bis zum Ausgang des Wärmetauschers 3 in jedem Betriebszustand des Apparats flüssig bleibt und es somit nicht aufgrund verdampfenden Wassers zu einer verschlechterten Wärmeübertragung kommt. Um dies zu gewährleisten, ist eine Wasserzufuhreinrichtung 5 vorgesehen, die, wie erwähnt, je nach erforderlichem Druck, wahlweise direkt an den Wasserleitungsanschluss 10 (etwa 3 bis 4 bar Überdruck) eines Hauses angeschlossen ist oder eine zusätzliche Pumpe 8 umfasst, die den Wasserdruck soweit erhöht, dass dieses auch bei sehr hohen, im Wärmetauscher 3 herrschenden Temperaturen in allen Betriebszuständen flüssig bleibt.

Im dargestellt Ausführungsbeispiel ist die Pumpe 8 integraler Bestandteil der Wasserzufuhreinrichtung 5, die u. a. (was nicht extra dargestellt ist) noch entsprechende Regelventile zur Dosierung der Wassermenge umfasst. Von dort gelangt das für den Reformerprozess erforderliche Wasser zunächst zum zwischen der Brennstoffzelle 13 und der Gasfeinreinigungsstufe 12 angeordneten Wärmetauscher 15, um die am Ausgang des Apparats zur Erzeugung von Wasserstoff anfallende Wärme aufzunehmen, da der Brennstoffzelle 13 für einen optimalen Brennstoffzellenprozess vorzugsweise relativ kalter (d. h. etwa 60°C warmer) Wasserstoff zugeführt werden sollte.

Nach dem Wärmetauscher 15 gelangt das immer noch flüssige Wasser zum Wärmetauscher 3, um dort das Produktgas auf die für die Katalysatorstufe 2 optimale Temperatur abzukühlen. Aufgrund des erfindungsgemäß aufgebrachten hohen Druckes bleibt das Wasser aber auch in diesem Wärmetauscher 3 stets flüssig.

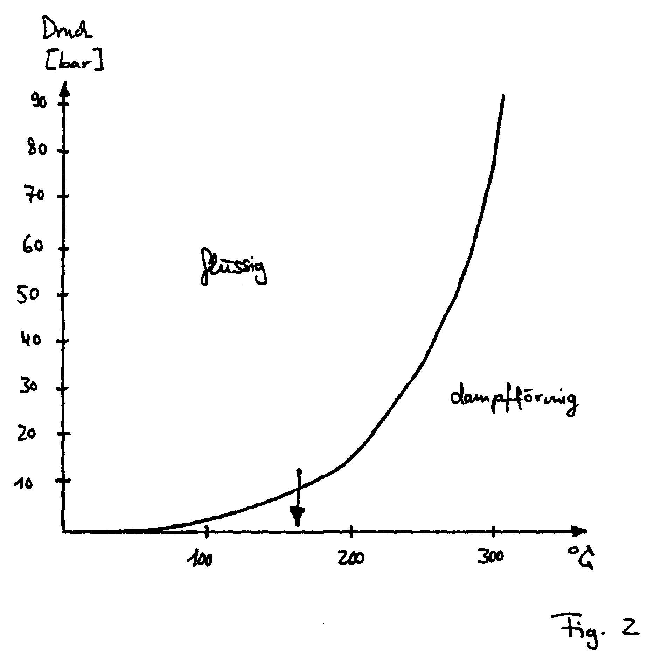

Um das Wasser dem Reformer 1 dampfförmig zuführen zu können, ist erfindungsgemäß nach dem Wärmetauscher 3 ein Expansionsventil 6 vorgesehen, dass den Druck im Wasser erheblich drosselt und damit zum Verdampfen desselben führt. Dieser Drosselvorgang ist in der qualitativ dargestellten Dampfdruckkurve in Fig. 2 verdeutlicht. Dort wird isotherm etwa 160°C heißes, flüssiges Wasser von 12 bar auf 1 bar gedrosselt und dabei verdampft.

Schließlich ist vorteilhaft nach dem Expansionsventil 6 eine Vorrichtung 7 zum Vermischen des Wasserdampfes mit dem vorzugsweise mittels der an den Katalysatorstufen 2, 13 angeordneten Aussenmantelkühlung 16 vorgeheizten Kohlenwasserstoffgas vorgesehen. Diese Vorrichtung 7 ist vorteilhaft als sogenannte Strahlpumpe 9 ausgebildet, die einen breiten Eintrittsbereich für den Wasserdampf aufweist, der sich stromabwärts kontinuierlich verengt und an seiner engsten Stelle mindestens eine Zuführung für das Kohlenwasserstoffgas umfasst, und die dementsprechend nach dem Venturidüsenprinzip (findet z. B. auch bei atmosphärischen Gasbrennern Verwendung) über den an der Stelle niedrigsten Druckes auftretenden Saugeffekt des Wasserdampfes das Kohlenwasserstoffgas in diesen hineinsaugt und in hohem Maße die beiden Gase miteinander verwirbelt.

### Bezugszeichenliste

- 1: Reformer
- 2: Katalysatorstufe
- 3: Wärmetauscher
- 4: Edukteingang
- 5: Wasserzufuhreinrichtung
- 6: Expansionsventil
- 7: Vorrichtung zum Vermischen
- 8: Pumpe
- 9: Strahlpumpe
- 10: Wasserleitungsanschluss
- 11: Gasbrenner
- 12: Gasfeinreinigungsstufe
- 13: Brennstoffzelle
- 14: Anodenrestgasrückführung
- 15: Wärmetauscher
- 16: Aussenmantelkühlung

## Patentansprüche

1. Apparat zur Erzeugung von Wasserstoff zum Betrieb einer Brennstoffzelle, umfassend einen Reformer (1) zur Umwandlung eines Eduktgases, nämlich Kohlenwasserstoffgas und Wasserdampf, in ein Wasserstoffgas und weitere Reformerprodukte wie Kohlendioxid und -monoxid enthaltendes Produktgas und mindestens eine Katalysatorstufe (2) zur Reduzierung des Kohlenmonoxidanteils im Produktgas, wobei zur Abkühlung des Produktgases mindestens zwischen dem Reformer (1) und der Katalysatorstufe (2) ein wasserdurchströmter Wärmetauscher (3) angeordnet ist, der ausgangsseitig hydraulisch mit einem Edukteingang (4) des Reformers (1) verbunden ist,
**dadurch gekennzeichnet,**
**dass** der Wärmetauscher (3) zur Gewährleistung eines flüssigen Aggregatzustandes des Wassers im stationären Betrieb innerhalb und am reformerseitigen Ausgang des Wärmetauschers (3) mit einer unter entsprechendem Überdruck stehenden Wasserzufuhreinrichtung (5) verbunden ist und
**dass** zwischen dem Wärmetauscher (3) und dem Edukteingang (4) am Reformer (1) eine Vorrichtung zur Druckentspannung zum Verdampfen des Wassers angeordnet ist.

2. Apparat nach Anspruch 1,
**dadurch gekennzeichnet,**
**dass** die Vorrichtung zur Druckentspannung als Expansionsventil (6) ausgebildet ist.

3. Apparat nach Anspruch 1 oder 2,
**dadurch gekennzeichnet,**
**dass** die Wasserzufuhreinrichtung (5) mit einem Wasserleitungsanschluss (10) eines Hauses verbunden ist.

4. Apparat nach einem der Ansprüche 1 bis 3,
**dadurch gekennzeichnet,**
**dass** die Wasserzufuhreinrichtung (5) eine Pumpe (8) zur Erhöhung des Wasserdrucks umfasst.

5. Apparat nach einem der Ansprüche 1 bis 4,
**dadurch gekennzeichnet,**
**dass** zwischen der Vorrichtung (6) zum Verdampfen des Wassers und dem Edukteingang (4) eine Vorrichtung (7) zum Vermischen des Wasserdampfes mit dem Kohlenwasserstoffgas angeordnet ist.

6. Apparat nach Anspruch 5,
**dadurch gekennzeichnet,**
**dass** die Vorrichtung (7) zum Vermischen des Wasserdampfes mit dem Kohlenwasserstoffgas als Strahlpumpe (9) ausgebildet ist.

7. Verfahren zum Betrieb eines Apparat zur Erzeugung von Wasserstoff, bei dem aus einem Kohlenwasserstoffgas und Wasserdampf umfassenden Eduktgas in einem Reformer (1) ein Wasserstoff, Kohlendioxid und Kohlenmonoxid umfassendes Produktgas erzeugt wird, welches zur Reduzierung des Kohlenmonoxidanteils mindestens einer dem Reformer (1) nachgeschalteten Katalysatorstufe (2) zugeführt wird, wobei zur Abkühlung des Produktgases ein zwischen dem Reformer (1) und der Katalysatorstufe (2) angeordneter, wasserdurchströmter Wärmetauscher (3) verwendet wird, der ausgangsseitig hydraulisch mit einem Edukteingang (4) des Reformers (1) verbunden ist,
**dadurch gekennzeichnet,**
**dass** das Wasser in flüssigem Aggregatzustand mit einem bezüglich seiner Temperatur oberhalb der Wasserdampfdruckkurve liegenden Druck durch den Wärmetauscher (3) gefördert und nach Passage des Wärmetauschers (3), aber vor dem Edukteingang (4) am Reformer (1) zur Verdampfung in einer Vorrichtung zur Druckentspannung auf einen unterhalb der Wasserdampfdruckkurve liegenden Druck entspannt wird.

8. Verfahren nach Anspruch 7,
**dadurch gekennzeichnet,**
**dass** der von der Vorrichtung zur Druckentspannung, vorzugsweise ein Expansionsventil (6), kommende Wasserdampf vor dem Edunkteingang (4) mit dem Kohlenwasserstoffgas vermischt wird.

9. Verfahren nach Anspruch 8,
**dadurch gekennzeichnet,**
**dass** der Wasserdampf und das Kohlenwasserstoffgas in einer Strahlpumpe (9) miteinander vermischt werden.
